(19)

Europäisches
Patentamt
European
Patent Office
Office européen
des brevets

(11) **EP 2 172 874 B1**

(12) **EUROPEAN PATENT SPECIFICATION**

(45) Date of publication and mention
of the grant of the patent:
**14.03.2012  Bulletin 2012/11**

(51) Int Cl.:
**G06K 9/52** (2006.01)

(21) Application number: **09172270.2**

(22) Date of filing: **06.10.2009**

(54) **Modeling images as mixtures of image models**

Modellierung von Bildern als Mischungen aus Bildmodellen

Modelage d'images en tant que mélange de modèles d'images

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **06.10.2008  US 245939
16.10.2008  US 252531**

(43) Date of publication of application:
**07.04.2010  Bulletin 2010/14**

(73) Proprietor: **Xerox Corporation
Rochester, NY 14644 (US)**

(72) Inventors:
• **Perronnin, Florent
38420 Domene (FR)**
• **Liu, Yan
38000 Grenoble (FR)**

(74) Representative: **Grünecker, Kinkeldey,
Stockmair & Schwanhäusser
Anwaltssozietät
Leopoldstrasse 4
80802 München (DE)**

(56) References cited:
**EP-A2- 1 343 107**

• **GREENSPAN H ET AL: "Context-dependent
segmentation and matching in image databases"
COMPUTER VISION AND IMAGE
UNDERSTANDING, ACADEMIC PRESS, US, vol.
93, no. 1, 1 January 2004 (2004-01-01), pages
86-109, XP004480410 ISSN: 1077-3142**
• **ACM, 2 PENN PLAZA, SUITE 701 - NEW YORK
USA, 24 August 2008 (2008-08-24), XP040462229**
• **FARQUHAR J D R ET AL: "Improving bag-of-
keypoints image categorisation: Generative
models and pdf kernels" TECHNICAL REPORT
UNIVERSITY OF SOUTHAMPTON, XX, XX, 17
February 2005 (2005-02-17), pages 1-17,
XP002389856**

## EP 2 172 874 B1

**Description**

BACKGROUND

The exemplary embodiment relates to image characterization. It finds particular application in connection with an apparatus and method for generation of an image representation as a mixture of a set of reference images. Implementations of the apparatus and method include image retrieval, image categorization, and image clustering applications, but it is to be appreciated that they are not limited to such applications.

Various image processing applications, such as retrieval, categorization, clustering, image enhancement, and the like, are becoming increasingly important given the widespread use of digital images. For example, for some applications, it would be helpful to retrieve images of a particular type of object, such as cars, from a database of images. In another application, given an image, it would be useful to identify and retrieve similar images from an image database. In other applications, given a large group of images, it would be useful to cluster them into a set of classes, based on content similarity.

To enable such techniques to be performed automatically or semiautomatically, some mechanism for automated image characterization based on the content of the image is desirable. Since a digital image is essentially in the form of pixel values, e.g., colorant values, for each of typically millions of pixels, image characterization techniques typically rely on extracting features from the image based on small segments of the image, referred to as patches. Techniques have been developed for categorizing images which rely on training a classifier, or set of classifiers, with information extracted from a large number of training images. The training images are manually labeled with one or more of a set of predefined object categories, such as person, landscape, animal, building, and the like. The classifier learns how to characterize a new image based on its extracted features and the extracted features of the labeled images. Such techniques, however, are manually intensive in the training phase, often requiring the manual labeling of a large number of images for each class for which the classifier is to be trained. Additionally, adding a new category generally involves considerable retraining of the classifier.

In processes which rely on identifying similar images, images may be characterized using a high level representation that is generated from the extracted low level features. It is known to model images using parameterized models. A Gaussian model, for example, characterizes an image using a Gaussian distribution representative of low level image features and having a mean vector and covariance matrix parameters. Characterizing the image by a single Gaussian component provides for straightforward comparison of different images, for example by comparing the mean vectors and covariance matrices of the two image models. However, a distribution having a single Gaussian component contains limited descriptive content and may be insufficient to adequately describe images. In other approaches, a mixture model is employed to characterize an image. For example, a Gaussian mixture model (GMM) describes the low level features distribution for an image using a weighted combination of Gaussian components each having mean vector and covariance matrix parameters.

A GMM or other mixture model has advantages in that it provides a higher number of components by which to characterize the image. On the other hand, it becomes more difficult to assess the similarity between images. For example, two images that are in reality quite similar may be fitted with very different sets of mixture model parameters, due to sparseness of the feature vectors sets extracted from the images. In such a case, the computed distance between the mixture models for the two images will be large, and the images will erroneously be deemed to be quite different.

In addition to this robustness problem, the use of mixture models can make image comparison computationally intensive. For example, in some studies it has been estimated that a GMM having about 128 Gaussian components is desirable to characterize an image sufficiently A comparison of two images would thus entail pairwise comparison of each set of 128 Gaussian components, leading to about 16,000 Gaussian comparison operations, making it computationally too expensive for many applications.

H. Greenspan et al., in a paper entitled "Context-Dependent Segmentation and Matching in Image Databases", Computer Vision and Imge Understanding, 93, No. 1, pages 86 - 109, January 2004, describe context dependent segmentation of a context based task wherein blobs are computed by using Gaussian mixture modeling and the use of the Earth movers distance to compute the dissimilarity of images as well as a flow matrix of the blobs between these images. In particular, individual images are represented by Gaussian mixture models generated by means of the expectation maximization algorithm.

EP 1 343 107 A2 discloses a method for recognizing faces using a principle component analysis as well as a second order independent component analysis on parts of these images faces. In particular, a combination of images are given as training images from which basis images are extracted such that a particular facial target image can be represented by a linear combination of the basis images.

The exemplary embodiment provides an apparatus and method for generation of a representation of an image which is both robust and easy to use and which can be generated largely automatically.

BRIEF DESCRIPTION

In accordance with one aspect of the invention, a method for generating an image representation is provided. The method includes modeling an original image as a mixture of reference image models in which the original image is represented by a set of mixture weights comprising a mixture weight for each of the reference image models, wherein the reference images may each be modeled as a probability density function over a set of probability distributions.

I n the method, the probability distributions may be continuous probability distributions.

In the method, the reference image models may be Gaussian Mixture Models(GMMs).

Each GMM may comprise weights for each of a set of Gaussian functions.

The GMMs may derived from a common GMM.

In the method, the reference images may be represented as multinomial distributions.

The multinomial distributions may be bags-of-visual-word representations.

In the method, the modeling may comprise estimating the mixture weights by optimizing an objective function in which each reference image is represented by a weighted probability distribution.

The optimizing of the objective function may include maximizing an objective function having the general form:

$$E_q\left[\log\left(\sum_{i=1}^{N}\omega_i p_i\right)\right] = \int_{x\in\Omega} q(x)\log\left(\sum_{i=1}^{N}\omega_i p_i(x)\right)dx = \sum_{k=1}^{K}\pi_k \int_{x\in\Omega} q_k(x)\log\left(\sum_{i=1}^{N}\omega_i p_i(x)\right)dx \quad (1),$$

where $E_q$ represents the expectation under $q$, and
$\Omega$ is the space of low-level feature vectors extracted from the original and reference images.

The optimization of the objective function may be performed by one of an Expectation Maximization and gradient descent optimization.

The original image may be one of the reference images and the optimization of the objective function may be terminated prior to its completion.

The method may further include associating the representation comprising the set of mixture weights with the original image in memory.

In accordance with another aspect of the exemplary embodiment, a computer implemented apparatus for generating an image representation is provided. The apparatus includes memory which stores a set of reference image models and an image representation generator which outputs a representation of an original image as a mixture of the reference image models in which the original image is described by a set of mixture weights comprising a mixture weight for each of the reference image models, each of which is modeled as a probability density function over a set of probability distributions.

In accordance with one other aspect of the invention, a method for generating an image representation includes modeling each of a set of references images as a Gaussian mixture model based on features extracted from the reference image. The method further includes modeling an original image as a mixture of the reference image Gaussian mixture models (GMMs) by optimizing an objective function in which each of the GMMs is associated with a respective weight and outputting the weights of the optimized objective function as the image representation.

BRIEF DESCRIPTION OF THE DRAWINGS

FIGURE 1 is a functional block diagram of an exemplary apparatus for generating a representation of a digital image;

FIGURE 2 is a flow diagram of an exemplary method for generating a representation of a digital image, which may be performed with the apparatus of FIGURE 1;

FIGURE 3 is a block diagram illustrating an exemplary classifier which may receive as input an image representation generated by the apparatus of FIGURE 1;

FIGURE 4 is a block diagram illustrating an exemplary image representation generator of the apparatus of FIGURE 1; and

FIGURE 5 is a plot of mean Average Precision vs. number of Gaussian components for a comparative method and the exemplary method.

DETAILED DESCRIPTION

The exemplary embodiment relates to an apparatus, a method, and a computer program product for generating an image representation of an original image. Reference images are first individually modeled. The original image is then modeled as a mixture of these reference images, or more precisely, their models. The image representation can be a vector of mixture weights, one weight for each of the reference image models. This representation may be used for a variety of applications, including retrieval, categorization and clustering.

Original images to be characterized in this way may be received by the apparatus in any convenient file format, such as JPEG, GIF, JBIG, BMP, TIFF, or other common file format used for images and which may optionally be converted to another suitable format prior to processing. Images may be individual images or video images and can be scanned images, photographs, graphics, text images, combinations thereof, or the like. In general, each input digital image includes image data for an array of pixels forming the image and may be in the form of a bitmap. The image data may include colorant values, such as grey levels, for a single color separation (e.g., for black and white images) or for each of a set of color separations, such as RGB, or be expressed in another other color space in which different colors can be represented. In general, the colorant values can be the optical density value of any single color channel, however expressed (RGB, $L*a*b*$, YCbCr, etc.).

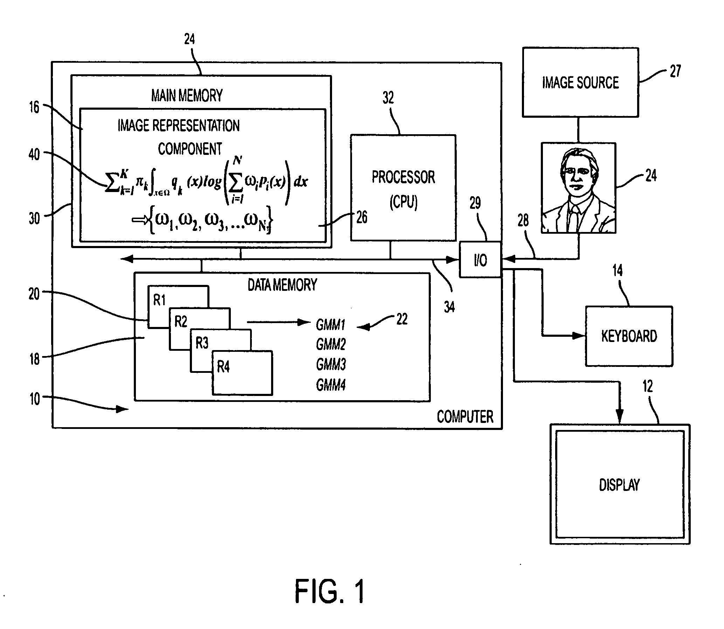

With reference to FIGURE 1, an exemplary apparatus for generating an image representation is illustrated. The apparatus may be embodied in one or more electronic processing devices, such as the illustrated computer 10. The computer may include a display **12** or other output device for displaying or otherwise generating a human-perceptible output and a keyboard **14** or other user input device for receiving user input. The computer **10** is configured to implement an image representation generator **16** for generating a representation of an original input image. The electronic processing device **10** may be the illustrated computer **10,** or another electronic processing device such as a network server, Internet-based server, personal data assistant (PDA), cellular telephone, or the like. The computer **10** includes data memory **18** for storing a set of reference images **20** (labeled R1, R2, R3, R4) as image data and/or information extracted therefrom, such as a set of reference models **22** (labeled GMM1, GMM2, GMM3, GMM4). The computer **10** is configured for receiving an original image **24** for which a representation is sought and storing the image in memory such as data memory **18** and for storing and/or outputting a representation **26** of the image generated by the image representation generator **16.** The image **24** can be input from any suitable image source **27,** such as a workstation, database, scanner, or memory storage device, such as a disk, camera memory, memory stick, or the like. The source **27** may be temporarily or permanently communicatively linked to the computer **10** via a wired or wireless link **28,** such as a cable, telephone line, local area network or wide area network, such as the Internet, through a suitable input/output (I/O) connection **29,** such as a modem, USB port, or the like.

The image representation generator **16** may be embodied in hardware or software or a combination thereof. As shown, the representation generator **16** is in the form of software components stored in main memory **30** of the computer and which are executed by an associated computer processor **32,** such as the computer's central processing unit (CPU). The components **18, 30, 32,** of the computer **10** may communicate via a data control bus **34.** Memories **18, 30** may be separate or combined and may be in the form of any type of computer readable medium such as random access memory (RAM), read only memory (ROM), magnetic disk or tape, optical disk, flash memory, holographic memory, or suitable combination thereof.

The exemplary image representation generator **16** includes instructions for generating a representation of the image **24.** As will be described in greater detail below, these instructions include instructions for estimating mixture weights $\omega_i$ of an objective function **40** in which the reference models **22** of the set of reference images **20** are each associated with a respective weight $\omega_l$, and for outputting the set of mixture weights as a representation **26** of the original image. More particularly, the image representation generator **16** receives a log-likelihood function **40,** which may be of the form given in Equation (1) below, and optimizes the $N$ adjustable weight parameters $\omega_i$, (one for each reference image) to generate an optimized log-likelihood function. The weights $\omega_i$ of the optimized log-likelihood function are stored as a representation **26** of the original image. The weights $\omega_i$ represent the relative contributions of the reference image models to that of the original image.

As used herein, the terms "optimize," "maximize," and similar phraseology are intended to be broadly construed as encompassing not only an absolute optimum or an absolute maximum, but also an optimum or maximum that is close to, but not precisely, the global optimum or maximum, or an optimum or maximum that is a local optimum or maximum but not a global optimum or maximum. For example, an iterative process may be used to optimize the log-likelihood function respective to the parameters $\omega_l$. In doing so, the iterative algorithm may be terminated based on stopping criteria that causes the algorithm to stop the optimization at a point at which the log-likelihood function is not yet at the absolute global maximum. Such optimization is said to optimize the log-likelihood function respective to the parameters $\omega_i$, even though the final value of the log-likelihood function may not be the absolute largest value attainable by adjustment of the parameters $\omega_i$. Similarly, some optimization algorithms disclosed or employed herein may converge to a locally optimal value rather than to the globally optimal value. Again, such optimization algorithms are said to optimize the parameters $\omega_i$, even though the final value may not be the absolute optimum value.

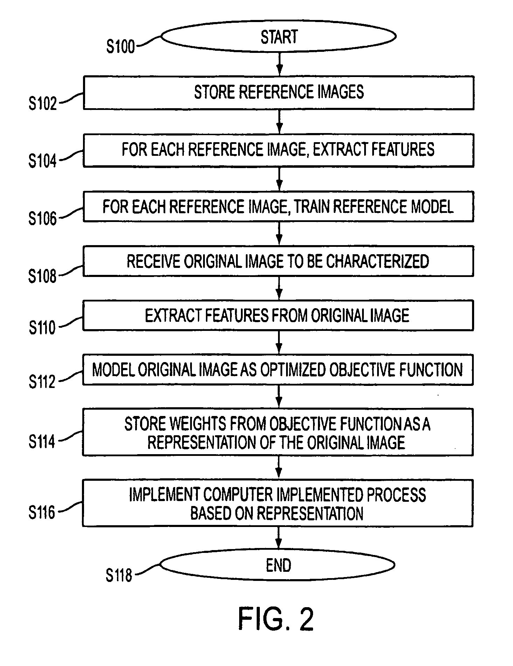

An exemplary method for generating an image representation **26** is briefly outlined in FIGURE 2. The method begins at S100.

At S102, a set of reference images **20** are received and may be stored in data memory **18** during processing.

At S104, for each reference image **20,** a set of low level features are extracted. These features may be extracted from a set of patches (regions) of the image. The patches may be obtained at keypoints, randomly, or on a regular grid, e.g., at multiple scales, as described, for example, in U.S. Pub. Nos. 2007/0005356, 2007/0258648, and 2008/0069456. The low level features extracted may be gradient features, pixel colors, grey levels, or the like and may be concatenated to form a feature vector or feature matrix for each patch. Two or more types of low level features may be extracted from the image, resulting in two or more feature vectors. The dimensionality of the feature vectors may be reduced using principal component analysis (PCA).

At S106, for each reference image **20,** a reference model **22** is trained, based on the extracted features (feature vectors). In various implementations described herein, each reference model **22** is a probability density function which describes a set of continuous or discrete probability distributions. As an example, each reference model is a Gaussian Mixture Model (GMM) which employs continuous probability distributions. In another implementation, the reference model is a multinomial distribution, which employs discrete probability distributions. However, other mixture models may alternatively be used, such as for example a mixture model including for example some Gaussian distribution components and some Laplace distribution components.

At S108 an original image **24** to be modeled is received and stored.

At S110, low level features of the original image **24** are extracted in a similar way to that described for the reference images **20** (S104).

At S112, the original image **24** is modeled by optimizing an objective function **40** in which each reference image is represented by its probability density function (e.g., its GMM) and an associated weight $\omega_i$.

At S114, the weights of the optimized objective function are stored and/or output, e.g., as a mixture weight vector **26,** which serves as a representation of the image **24.** Where more than one type of feature is used as the low level feature, a mixture weight vector may be generated for each feature type.

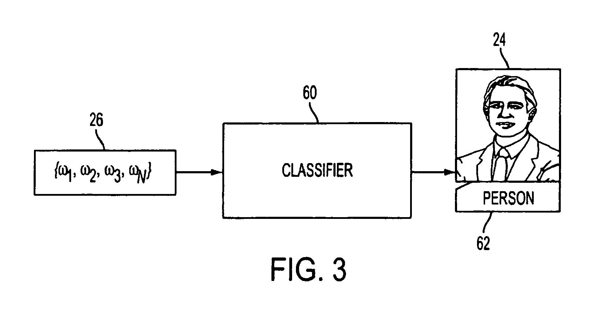

At S116, a computer implemented process may be performed which utilizes the mixture weight vector **26** thus obtained. For example, the mixture weight vector for one image can be compared with the mixture weight vector(s) of one or more other images, derived in the same way, for clustering or similarity determinations. In other embodiments an image **24** may be classified by inputting its mixture weight vector **26** into a classifier **42** (FIGURE 3) which has been trained on the mixture weight vectors of a set of manually labeled training images. The classifier labels the image with a class label **44** corresponding to one of the image classes on which the classifier has been trained.

The method ends at S 118.

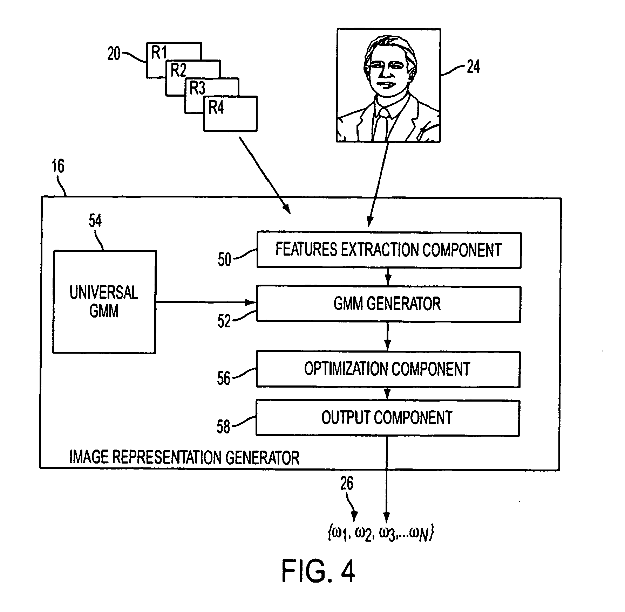

FIGURE 4 is a functional block diagram of an exemplary image representation generator **16** and the components which it may include for performing the exemplary method. As will be appreciated, the components may be software components that may be suitably combined or split into subcomponents. The image representation generator **16** includes a features extraction component **50** which extracts features from images, such as the reference images **20** and original image **24** (S104 and S110). A reference image model generator **52** generates a GMM **22** (or other probability model) for each reference image and for the original image, based on the extracted features, e.g., starting with a trained universal GMM **54.** An optimization component **56** optimizes an objective function **40** by optimizing weights for the reference image GMMs **22.** An output component **58** outputs a vector for the original image comprising the set of optimized weights.

The exemplary method (and representation generator) may be implemented on one or more general purpose computers, special purpose computer(s), a programmed microprocessor or microcontroller and peripheral integrated circuit elements, an ASIC or other integrated circuit, a digital signal processor, a hardwired electronic or logic circuit such as a discrete element circuit, a programmable logic device such as a PLD, PLA, FPGA, or PAL, or the like. In general, any device, capable of implementing a finite state machine that is in turn capable of implementing the flowchart shown in FIGURE 2, can be used to implement the method for generating an image representation.

The method illustrated in FIGURE 2 may be implemented in a computer program product that may be executed on a computer. The computer program product may be a tangible computer-readable recording medium on which a control program is recorded, such as a disk, hard drive, or may be a transmittable carrier wave in which the control program is embodied as a data signal. Common forms of computer-readable media include, for example, floppy disks, flexible disks, hard disks, magnetic tape, or any other magnetic storage medium, CD-ROM, DVD, or any other optical medium, a RAM, a PROM, an EPROM, a FLASH-EPROM, or other memory chip or cartridge, transmission media, such as acoustic or light waves, such as those generated during radio wave and infrared data communications, and the like, or any other medium from which a computer can read and use.

The following aspects of the method and apparatus are covered in the sections below. Section A introduces a set of notations and provides the mathematical framework for one implementation of the method. Sections B and C provide two optimization strategies which may be employed to compute the image representation, i.e., the mixture weights of the log-likelihood function. In Section D, issues of convergence are discussed. It will be noted that Sections A to D focus on the case where images are modelled as continuous distributions (GMMs). In Section E, an alternative implementation is discussed for the case where an image is modelled as a multinomial distribution. In section F, various applications of the image representation are discussed.

A. Notations and Mathematical Framework

In one implementation, the images (reference images and original image) are modeled as mixture models, typically Gaussian Mixture Models (GMMs). In the exemplary system, the GMM describing an image *I* is estimated from the set of low-level feature vectors extracted from *I*. The density of low-level features in the image is estimated and represented by a mixture of distribution functions (Gaussians). The GMM is thus a weighted mixture of Gaussians representative of the low level image features, each Gaussian having a mean vector and covariance matrix parameters. Each image is described in terms of a set of Gaussians. In one embodiment, the GMM for each image **20, 24** is generated by adaptation of a universal GMM **54,** as described, for example, in U.S. Application Serial No. 11/947,859, entitled OBJECT COMPARISON, RETRIEVAL, AND CATEGORIZATION METHODS AND APPARATUSES, by Liu and Perronnin. The universal GMM is first trained on a large number of patches extracted from a large number of images (not limited to the images in the reference set). The universal GMM is then adapted by training the universal GMM with the patches extracted from the image in question.

Let *K* represent the number of Gaussians in the original GMM and let *K,* represent the number of Gaussians in the i-th reference image. *K* and *K,* may suitably be, for example, at least 15 or at least 20, e.g., about 40 or more, and can be up to for example, about 1,000 or more, e.g., less than about 500. Let *N* represent the number of reference images **20.** *N* may suitably be at least 10 or at least 20, e.g. at least 50 and in some embodiments, up to 1000 or 5000 or more, e.g., up to about 1,000,000.

Let *q* denote the mixture model of the image **24** to be described. Therefore, $q = \sum_{k=1}^{K} \pi_k q_k$ , where $q_k$ represents the *k*th Gaussian and $\pi_k$ its weight in the GMM. The probability density function of the *i*-th reference image is denoted $p_i = \sum_{k=1}^{K,} \pi_{i,k} p_{i,k}$ , where $p_{i,k}$ represents the *k*th Gaussian of the *i*-th reference image and $\pi_{i,k}$ its weight.

A representation of the image **24** as a weighted combination of the *N* reference images can suitably be obtained by estimating the mixture weights $\omega_i$ which maximize the following cost function:

$$E_q\left[\log\left(\sum_{i=1}^{N}\omega_i p_i\right)\right] = \int_{x \in \Omega} q(x)\log\left(\sum_{i=1}^{N}\omega_i p_i(x)\right)dx = \sum_{k=1}^{K}\pi_k \int_{x \in \Omega} q_k(x)\log\left(\sum_{i=1}^{N}\omega_i p_i(x)\right)dx \quad (1)$$

where, $E_q$ represents the expectation under *q*, and
$\Omega$ is the space of the low-level feature vectors extracted from the original and reference images.
The optimization may be performed under the following two constraints:

$$\omega_i \geq 0, \forall i \quad (2)$$

$$\sum_{i=1}^{N}\omega_i = 1 \quad (3)$$

The first constraint avoids negative weights. The second constraint requires that all the weights sum to a specific value (here, 1).
The weights in the representation **26** of the image can be concatenated as a vector $\{\omega_1, \omega_2, \omega_3, ...\omega_N\}$. The function provided in Eqn. 1 is optimized, when $\sum_{i=1}^{N}\omega_i p_i$ is most similar to *q*. Other optimization functions can, of course be used in place of Eqn. 1. Suitably, any function which measures a similarity between *q* and $\sum_{i=1}^{N}\omega_i p_i$ may be used.

The function could be of different forms. As an example, the objective function could be of the form

$$\int_x \sqrt{q(x) \times \left( \sum_{i=1}^{N} \omega_i p_i(x) \right)} \ dx \ .$$

While Eqn. 1 is a convex objective function, its direct optimization is difficult. Accordingly, an approximation method is conveniently employed to estimate the weights $\omega_i$. In the following discussion, two approximation methods are described by way of example, which both rely on Expectation Maximization algorithms. In the first, described in Section B, it is assumed that the system 16 has access to a set of feature vectors $X$ distributed according to $q$. In the second, described in Section C, it is assumed that the system only has access to $q$. Other optimization methods may include gradient descent or *Maximum a Posteriori* (MAP) methods (see, for example, section D). Another optimization method which may be utilized herein is described in copending application Serial No. 12/245,939.

B. Sampling approximation

Let $X = \{x_t, t = 1...T\}$ be a set of low-level feature vectors distributed according to $q$. This is typically the set of feature vectors extracted from the image **24** to be described and which are supposed to have been generated by $q$ in a maximum likelihood estimation (MLE) framework. If the number of samples $T$ is large enough, the law of large numbers can be used and the objective function (1) approximated as:

$$\frac{1}{T} \sum_{t=1}^{T} \log \left( \sum_{i=1}^{N} \omega_i p_i(x_t) \right) \quad (4)$$

A suitable procedure for MLE is the Expectation Maximization (EM) algorithm, described for example in Dempster et al., "Maximum likelihood from incomplete data via the EM algorithm," Journal of the Royal Statistical Society (1977). The EM algorithm alternates two steps: (1) an expectation (E) step in which the posterior probabilities of mixture occupancy (also referred to as occupancy probabilities) are computed based on the current estimates of the parameters; and (2) a maximization (M) step in which the parameters are updated based on the expected complete data log-likelihood which depends on the occupancy probabilities computed in the E-step. In the present case, the EM algorithm is used to estimate the $\omega_i$'s.

The E-step may suitably include computing the occupancy probabilities $\gamma_i(x_t)$ (the probability for observation $x_t$ to have been generated by the i-th reference GMM):

$$\gamma_i(x_t) = \frac{\omega_i p_i(x_t)}{\sum_{j=1}^{N} \omega_j p_j(x_t)} \quad (5)$$

The M-step gives the following estimates:

$$\hat{\omega}_i = \frac{1}{T} \sum_{t=1}^{T} \gamma_i(x_t) \quad (6)$$

Where $\hat{\omega}_i$ represents optimized values of each of the weights. As this is a convex optimization problem, there is no initialization issue. In the exemplary implementation, it is suitable to initially set $\omega_i = \dfrac{1}{N}, \ \forall i$ (*i.e.*, assign the same weight to all the reference image models). During the optimization, these weights change so that they are no longer equal.

In other embodiments, other algorithms such as gradient descent can also be used in place of EM.

C. Virtual sampling approximation

As an alternative to the method in B, the case where *q* is used directly will now be considered. There are at least two reasons for using *q* rather than the samples *X* used to estimate *q*. One of these is that storing *X* usually requires significantly more space than storing *q*. Another advantage is that the system may incorporate in *q* some a priori information (see, for example, U.S. 11/947,859, in which image-GMMs are estimated with the *maximum a posteriori* (MAP) criterion).

For example, in an approach similar to that described in Vasconcelos and A. Lippman, "Learning mixture hierarchies," NIPS, 1998, it is assumed that the GMM *q* generates *K* blocks of "virtual" samples, each block containing a fixed number *M* of samples. Assume also that each component $q_k$ generates one block and thus that there is a unique hidden variable associated to each block. Let $X_k$ be the block generated by $q_k : X_k = \{x_{k,i}, t = 1...M\}$.

If the number *M* of samples in each block is large enough, the objective function (1) can be approximated as follows (using again the law of large numbers):

$$\frac{1}{M}\sum_{k=1}^{K}\pi_k \log\left(\sum_{i=1}^{N}\omega_i p_i(X_k)\right) \quad (7)$$

The EM algorithm can then be used to estimate the values of the weights $\omega_i$. During the E-step, the probability $\gamma_i(X_k)$ that block $X_k$ was generated by $p_i$ may suitably be computed as follows:

$$\gamma_i(X_k) = \frac{\omega_i p_i(X_k)}{\sum_{j=1}^{N}\omega_j p_j(X_k)} \quad (8)$$

The M-step re-estimation formula may be suitably written as:

$$\hat{\omega}_i = \sum_{k=1}^{K}\pi_k \gamma_i(X_k) \quad (9)$$

The next step is to compute the $p_i(X_k)$'s. Note that:

$$\frac{1}{M}\log p_i(X_k) = \frac{1}{M}\sum_{i=1}^{M}\log p_i(x_{k,i}) \approx E_{q_k}[\log p_i] = -H(q_k, p_i) \quad (10)$$

where $H(q_k, p_i)$ is the cross-entropy between $q_k$ and $p_i$. Once again, the approximation is based on the law of large numbers (assuming that *M* is large). Thus:

$$p_i(X_k) \approx \exp[-M \times H(q_k, p_i)]. \quad (11)$$

The remaining step is to define how to compute the cross-entropy $H(q_k, p_i)$. Since $q_k$ is a mixture component (a Gaussian in the present case) and $p_i$ is a mixture model (a GMM in the present case), therefore, there is no closed-form expression for $H(q_k, p_i)$. However, an approximation may be made, similar to that used for the Kullback-Leibler divergence (see Goldberger, et al., "An Efficient Image Similarity Measure based on Approximations of KL-Divergence Between Two Gaussian Mixtures," ICCV, 2003). This may include approximating $p_i$ by the mode which is closest to $q_k$:

$$H(q_k, p_i) = -\int_x q_k(x) \log\left(\sum_{j=1}^{K_i}\pi_{i,j} p_{i,j}(x)\right)dx \approx \min_j -\int_x q_k(x) \log\left(\pi_{i,j} p_{i,j}(x)\right)dx \quad (12)$$

In the present case, since $q$ and the $p_i$ values are adapted from a common GMM, there is a direct correspondence between the Gaussians of $q$ and the Gaussians of the $p_i$'s. Thus, $K = K_i$ for all $i$. Thus the expression can be written as:

$$H(q_k, p_i) \approx - \int_x q_k(x) \log \left( \pi_{i,k} p_{i,k}(x) \right) dx = -\log \pi_{i,k} + H(q_k, p_{i,k}) \qquad (13)$$

There is a closed-form expression for the cross-entropy $H(q_k, p_{i,k})$ between two Gaussians. The direct correspondence reduces the cost of computing $H(q_k, p_i)$ by a factor $K$ (see App. Ser. No. 11/947,859 for a fuller description).

Note that parameter $M$ can be readily optimized, e.g., through cross-validation. Although the previous derivations assume that $M$ is large (to apply the law of large numbers), it has been found in practice that the optimal value for $M$ (in terms of minimization of the error rate) may be small, e.g., less than about 10, and can conveniently be set to a value as low as 1, e.g., $M=1$.

D. Convergence issues

It is sometimes the case that the image to be modeled by $q$ is one of the reference images $p_j$. This happens when one wants to compute the representations of each of a set $S$ of images using $S$ as the set of reference images (for example, in a classification task). If $q = p_j$, then the objective function (1) is maximized by $\omega_j = 1$ and $\omega_i = 0$, $\forall i \neq j$. i.e., the image is characterized entirely by its own GMM. This does not provide useful information about the rest of the reference set. To avoid this issue, one of the three following strategies may be employed.

The simplest strategy is to stop the EM iterations after a small number of iterations (e.g. 1, 3 or 5), i.e., when EM has not fully converged. Although simplistic, this approach has been found to work well in practice. In the case of 1 iteration, the mixture weight estimates are just the posterior probabilities (assuming that the $\omega_i$'s were initialized uniformly).

The second strategy is to modify the constraints on $\omega_i$ and to enforce $\omega_i \leq \theta < 1$, i.e. to prevent any of the reference images from taking all the weight. The optimal $\theta$ value may be found through cross-validation.

The third strategy is to prevent any of the $\omega_i$'s going to 0. To do this, a Bayesian framework may be adopted and it is assumed that there is a prior probability on the distribution of the parameters $\omega_i$ (here the prior information is that the weights cannot be 0). This is referred to as Maximum a Posteriori (MAP) estimation. As is generally the case, a Dirichlet prior is assumed, with parameters $\{\alpha_i, i = 1...N\}$. The objective function (1) then becomes:

$$\int_x q(x) \log \left( \sum_{i=1}^{N} \omega_i p_i(x) \right) dx + \sum_{i=1}^{N} \alpha_i \log(\omega_i) \qquad (14)$$

The E-steps (5) and (8) are unchanged. The M-steps are modified as follows. (6) becomes:

$$\hat{\omega}_i = \frac{\sum_{t=1}^{T} \gamma_i(x_t) + \alpha_i}{T + \sum_{i=1}^{N} \alpha_i} \qquad (15)$$

and (9) becomes:

$$\hat{\omega}_i = \frac{\sum_{k=1}^{K} \pi_k \gamma_i(X_k) + \alpha_i}{1 + \sum_{i=1}^{N} \alpha_i} \qquad (16)$$

It is suitable to set $\alpha_i = \alpha$ and to find the optimal parameter $\alpha$ through cross-validation.

E. Multinomial distributions

In the prior description the images were each modeled as a GMM. In another implementation, the images are modeled as a multinomial distribution. For example, an image representation based on the bag-of-visual-words (BOV) approach as described, for example, in G. Csurka, C. Dance, L. Fan, J. Willamowski and C. Bray, "Visual Categorization with Bags of Keypoints," ECCV workshop on Statistical Learning in Computer Vision, 2004 and U.S. Pub. No. 2008/0069456, may be employed. In this embodiment, an image is encoded as a histogram of visual word frequencies.

As for the GMM implementation, it is assumed that there are $N$ reference images, but in this case, each is described with a BOV representation. Each reference BOV can be identified with an aspect of a Probabilistic Latent Semantic Analysis (PLSA) model (see, for example, T. Hofmann, "Unsupervised learning by probabilistic latent semantic analysis," Journal of Machine Learning, vol. 42, pp. 177-196, 2001, hereinafter Hofmann) Let $p_{i,j}$ be the frequency of visual-word $v_j$ in the reference image $i$. Let $q_j$ be the frequency of visual-word $v_j$ in the image to be described.

In such a case, the objective function (1) becomes:

$$\sum_{j=1}^{M} q_j \log\left(\sum_{i=1}^{N} \omega_i p_{i,j}\right) \quad (17)$$

The following EM-algorithm can be applied iteratively (see Hofmann):

E-step:

$$\gamma_{i,j} = \frac{\omega_i p_{i,j}}{\sum_{k=1}^{N} \omega_k p_{k,i}}$$

M-step:

$$\hat{\omega}_i = \sum_j \gamma_{i,j} q_j$$

F) Applications

The vector of weights **26** generated by any of the methods described above may be used as a representation of an image **24** in a variety of applications of which the following are examples:

1. Image retrieval: the distance between two images can be defined as a distance between their mixture weight vectors. Several suitable measures of similarity / distance between histograms including the dot product, the chi2 distance, the Kullback-Leibler (KL) divergence, the Jensen-Shannon divergence, and the like may be used in computing similarity. For example, a large set $S$ of images and their corresponding vectors **26** are stored in memory. A user may input a new image or select one of the set to be used as a target image. Similar images are automatically retrieved from the set, based on the similarity of their vectors to that of the target image. For example, the system retrieves images whose vectors equal or exceed a threshold of similarity. Alternatively, the 10 images (or any other selected number) with the highest similarity measure may be retrieved from the set. The retrieved images may be presented to a user for review, e.g., on the display **12.**

A component for image retrieval may be included in the representation generator or may be a separate component of the same or a separate computer.

2. Image classification: the vector representation of the image may be fed to virtually any discriminative classifier **60,** as illustrated schematically in FIG. 3. Exemplary classifiers may be based on sparse logistic regression, neural networks, linear discriminant analysis, support vector machines, naive Bayes, or the like. For example, the classifier may be trained with images manually assigned to one of a set of classes, such as cars, portraits, landscapes, seascapes, urban scenes, etc. The classifier assigns a class label **62** to a new image, based on its vector representation. The classifier **60** may be included in the representation generator **16** or may be a separate component of the same computer **10** or a separate computer.

The assigned class may be used in a further computer implemented process, such as class-based automated image enhancement (see for example, U.S. Application Serial No. 11/767,739, filed June 25, 2007, entitled CLASS-BASED IMAGE ENHANCEMENT SYSTEM, by Marco Bressan, et al.), class-based image cropping (see U.S. Application Serial No. 12/033,434, entitled CONTEXT DEPENDENT INTELLIGENT THUMBNAIL IMAGES, by Csurka).

3. Image clustering: as the image representation **26** is non-negative, it is well-suited to Probability Latent Semantic Analysis (PLSA) clustering. For example a set of images may be clustered into clusters, based on the similarity of their image representations. The computer **10** or a communicatively linked computer may include a component for image clustering.

The exemplary mixture based representation of an image is robust and easy to use, making it a useful alternative to traditional kernel-based learning or similarity- or dissimilarity-based learning techniques (see, for example, the method described in Pekalska, P. Paclik and R. Duin, "A Generalized Kernel Approach to Dissimilarity-based Classification," Journal of Machine Learning Research, Special Issue on Kernel Methods, vol. 2, no. 2, 175-211, 2002). One advantage of the present method over such methods is that in the prior methods, each reference object contributes independently to the representation. In the present exemplary method, the reference images contribute jointly to the image representation. An evaluation of the present method on a dataset of images has shown that the exemplary method leads to higher accuracy in a classification task.

The exemplary method also has advantages in that the present method does not require an image to be described with respect to a set of reference concepts, but rather can be described with respect to a set of reference images. Training of semantic concepts can require a large amount of labeled data, whereas the exemplary reference images need not be labeled.

EXAMPLE:

A dataset of images was used to test the accuracy of the exemplary image representation in a classification application. As the dataset, the PASCAL VOC 2007 database was used. This consists of 20 object categories: person, bird, cat, cow, dog, horse, sheep, aeroplane, bicycle, boat, bus, car, motorbike, train, bottle, chair, dining table, potted plant, sofa and TV monitor. In the dataset, there are 5,011 images for training and 4,092 for testing (assessing performance).

The measure of performance used was the average precision (AP). The mean average precision (mAP), as the mean AP over the 20 categories, is reported herein. Precision, for each class, is the number of images correctly classified by the system as a percentage of the number of images assigned to that class by the system. Average precision is the average of precisions computed after truncating the list after each of the correctly classified images, in turn (see for example, the definition available at: http://en.wikipedia.org/wiki/Information_retrieval#Average_precision_of_precision_and_recall).

The example made use of two types of low-level features: grey-level features and color features. The dimensionality of these feature vectors was reduced using principal component analysis (PCA).

The training images in the dataset were used as reference images. First, a universal model (GMM) was trained with a subset of all the training images using the method described in App. Ser. No. 11/947,859. The image-GMMs were then estimated through *maximum a posteriori* (MAP) adaptation of the universal GMM. The reference images (labeled according to class) were used to train the classifier. Images from the testing set were classified with the trained classifier, based on their vectors. A manual assessment was made to determine whether the classification was correct.

It was found that the virtual sampling approximation (section C)) consistently outperformed the sampling approximation (section B). Accordingly, only results for the virtual sampling method are reported. The difference may be due to the fact that q incorporates a *priori* information. For classification, sparse logistic regression (SLR) was used.

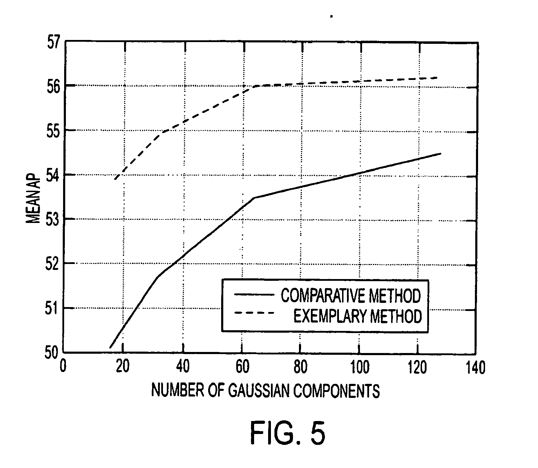

Classification results are shown in FIGURE 5 (labeled Exemplary Method). For comparison purposes, the method of App. Ser. No. 11/947,859 was also used on the dataset ("Comparative method"). In the comparative method, images were modeled as the vector of similarities / distances with respect to a set of reference images. The proposed measures of that approach are the KL divergence or the probability product kernel (PPK). Only results for the KL divergence are reported.

The exemplary method clearly leads to an improvement of the classification accuracy as seen by higher mean average precision, especially for a small number of Gaussian components.

**Claims**

1. A method for generating an image representation comprising:

    modeling an original image as a mixture of reference image models in which the original image is represented by a set of mixture weights comprising a mixture weight for each of the reference image models, wherein the reference images are each modeled as a probability density function over a set of probability distributions.

2. The method of claim 1, wherein the probability distributions are continuous probability distributions.

3. The method of claim 1, wherein the reference image models are Gaussians Mixture Models.

4. The method of claim 3, wherein each Gaussian Mixture Model comprises weights for each of a set of Gaussian functions.

**5.** The method of claim 3, where the Gaussian Mixture Models are derived from a common Gaussian Mixture Model.

**6.** The method of claim 1, where the reference images are represented as multinomial distributions.

**7.** The method of claim 1, where the multinomial distributions are bags-of-visual-word representations.

**8.** The method of claim 1, wherein the modeling comprises estimating the mixture weights by optimizing an objective function in which each reference image is represented by a weighted probability distribution.

**9.** The method of claim 8, wherein the optimizing includes maximizing an objective function having the general form:

$$E_q\left[\log\left(\sum_{i=1}^{N}\omega_i p_i\right)\right] = \int_{x\in\Omega} q(x)\log\left(\sum_{i=1}^{N}\omega_i p_i(x)\right)dx = \sum_{k=1}^{K}\pi_k \int_{x\in\Omega} q_k(x)\log\left(\sum_{i=1}^{N}\omega_i p_i(x)\right)dx \quad (1),$$

where $E_q$ represents the expectation under $q$, and
$\Omega$ is the space of low-level feature vectors extracted from the original and reference images.

**10.** The method of claim 8, wherein the optimization is performed by one of an Expectation Maximization and gradient descent optimization.

**11.** The method of claim 8, wherein the original image is one of the reference images and wherein the optimization is terminated prior to completion.

**12.** The method of claim 1, further comprising associating the representation comprising the set of mixture weights with the original image in memory.

**13.** A computer implemented apparatus for generating an image representation comprising;

memory which stores a set of reference image models; and
an image representation generator which outputs a representation of an original image as a mixture of the reference image models in which the original image is described by a set of mixture weights comprising a mixture weight for each of the reference image models each of which is modeled as a probability density function over a set of probability distributions.

**14.** Method for generating an image representation comprising:

modeling each of a set of references images as a Gaussian mixture model based on features extracted from the reference image;

**Patentansprüche**

**1.** Ein Verfahren zum Erzeugen einer Bilddarstellung, das umfasst:

Modellieren eines originalen Bildes als eine Mischung von Referenzbildmodellen, in denen das originale Bild durch einen Satz von Mischungsgewichten dargestellt wird, der für jedes der Referenzbildmodelle ein Mischungsgewicht umfasst, wobei
jedes der Referenzbilder als eine Wahrscheinlichkeitsdichtefunktion über einen Satz von Wahrscheinlichkeitsverteilungen modelliert wird.

**2.** Das Verfahren von Anspruch 1, in dem die Wahrscheinlichkeitsverteilungen kontinuierliche Wahrscheinlichkeitsverteilungen sind.

**3.** Das Verfahren von Anspruch 1, in dem die Referenzbildmodelle Gaussian Mixture Models sind.

**4.** Das Verfahren von Anspruch 3, in dem jedes Gaussian Mixture Model Gewichte für jede von einem Satz von Gaussfunktionen umfasst.

5. Das Verfahren von Anspruch 3, in dem die Gaussian Mixture Models aus einem gemeinsame Gaussian Mixture Model hergeleitet werden.

6. Das Verfahren von Anspruch 1, in dem die Referenzbilder als multinomiale Verteilungen dargestellt werden.

7. Das Verfahren von Anspruch 7, in dem die multinomialen Verteilungen Bags-of-Visual-World-Darstellungen sind.

8. Das Verfahren von Anspruch 1, in dem das Modellieren das Schätzen der Mischungsgewichte durch Optimieren einer objektiven Funktion, in der jedes Referenzbild durch eine gewichtete Wahrscheinlichkeitsverteilung dargestellt wird, umfasst.

9. Das Verfahren von Anspruch 8, in dem das Optimieren das Maximieren einer objektiven Funktion umfasst, die die allgemeine Form

$$E_q\left[\log\left(\sum_{i=1}^{N}\omega_i p_i\right)\right] = \int_{x\in\Omega} q(x)\log\left(\sum_{i=1}^{N}\omega_i p_i(x)\right)dx = \sum_{k=1}^{K}\pi_k\int_{x\in\Omega} q_k(x)\log\left(\sum_{i=1}^{N}\omega_i p_i(x)\right)dx$$

aufweist, wobei $E_q$ die Erwartung unter q darstellt, und $\Omega$ der Raum von Low-Level-Merkmalsvektoren, die aus den originalen Bildern und Referenzbildern extrahiert werden, ist.

10. Das Verfahren von Anspruch 8, in dem das Optimieren durch Erwartungswertmaximierungs- oder Gradientenoptimierung ausgeführt wird.

11. Das Verfahren von Anspruch 8, in dem das originale Bild eines der Referenzbilder ist, und in dem die Optimierung vor der Vollendung beendet wird.

12. Das Verfahren von Anspruch 1, das weiterhin das Assoziieren der Darstellung, die den Satz von Mischungsgewichten umfasst, mit dem originalen Bild im Speicher umfasst.

13. Eine computerimplementierte Einrichtung zum Erzeugen einer Bilddarstellung, die umfasst:

einen Speicher, der einen Satz von Referenzbildmodellen speichert; und
einen Bilddarstellungsgenerator, der eine Darstellung eines originalen Bildes als eine Mischung von Referenzbildmodellen ausgibt, in denen das originale Bild durch einen Satz von Mischungsgewichten beschrieben wird, der für jedes der Referenzbildmodelle, von denen jedes als eine Wahrscheinlichkeitsdichtefunktion über einen Satz von Wahrscheinlichkeitsverteilungen modelliert wird, ein Mischungsgewicht umfasst.

14. Verfahren zum Erzeugen einer Bilddarstellung, das umfasst:

Modellieren von jedem eines Satz von Referenzbildern als ein Gaussian Mixture Model auf der Grundlage von Merkmalen, die aus dem Referenzbild extrahiert werden;
Modellieren eines originalen Bildes als eine Mischung von den Referenzbild-Gaussian Mixture Models durch Optimieren einer objektiven Funktion, in der jedes der Gaussian Mixture Models mit einem entsprechenden Gewicht assoziiert wird; und
Ausgeben der Gewichte der optimierten objektiven Funktion als die Bilddarstellung.

**Revendications**

1. Procédé destiné à générer une représentation d'image comprenant :

la modélisation d'une image d'origine comme un mélange de modèles d'image de référence où l'image d'origine est représentée par un ensemble de poids de mélange comprenant un poids de mélange pour chacun des modèles d'image de référence, où
chacune des images de référence est modélisée comme une fonction de densité de probabilité sur un ensemble de distributions de probabilités.

2. Procédé de la revendication 1, dans lequel les distributions de probabilités sont des distributions de probabilités continues.

3. Procédé de la revendication 1, dans lequel les modèles d'image de référence sont des Modèles de Mélange Gaussien.

4. Procédé de la revendication 3, dans lequel chaque Modèle de Mélange Gaussien comprend des poids pour chacune d'un ensemble de fonctions Gaussiennes.

5. Procédé de la revendication 3, où les Modèles de Mélange Gaussien sont dérivés à partir d'un Modèle de Mélange Gaussien commun.

6. Procédé de la revendication 1, où les images de référence sont représentées sous de forme de distributions multinomiales.

7. Procédé de la revendication 1, où les distributions multinomiales sont des représentations par sac de mots visuels.

8. Procédé de la revendication 1, dans lequel la modélisation comprend l'estimation des poids de mélange en optimisant une fonction objective où chaque image de référence est représentée par une distribution de probabilité pondérée.

9. Procédé de la revendication 8, dans lequel l'optimisation comporte la maximisation d'une fonction objective ayant la formule générale :

$$E_q\left[\log\left(\sum_{i=1}^{N}\omega_i p_i\right)\right] = \int_{x\in\Omega} q(x)\log\left(\sum_{i=1}^{N}\omega_i p_i(x)\right)dx = \sum_{k=1}^{K}\pi_k \int_{x\in\Omega} q_k(x)\log\left(\sum_{i=1}^{N}\omega_i p_i(x)\right)dx$$

$$(1),$$

où Eq représente l'espérance sous q, et
Q est l'espace de vecteurs de caractéristiques de bas niveau extraits des images d'origine et de référence.

10. Procédé de la revendication 8, dans lequel l'optimisation est effectuée par l'une d'une optimisation par descente de gradient et d'une Maximisation d'Espérance.

11. Procédé de la revendication 8, dans lequel l'image d'origine est l'une des images de référence et dans lequel l'optimisation est terminée avant son achèvement.

12. Procédé de la revendication 1, comprenant en outre l'association de la représentation comprenant l'ensemble de poids de mélange avec l'image d'origine en mémoire.

13. Appareil mis en oeuvre par ordinateur pour générer une représentation d'image comprenant :

une mémoire qui stocke un ensemble de modèles d'image de référence ; et
un générateur de représentation d'image qui délivre en sortie une représentation d'une image d'origine comme un mélange des modèles d'image de référence où l'image d'origine est décrite par un ensemble de poids de mélange comprenant un poids de mélange pour chacun des modèles d'image de référence dont chacun est modélisé comme une fonction de densité de probabilité sur un ensemble de distributions de probabilités.

14. Procédé destiné à générer une représentation d'image comprenant le fait :

de modéliser chacune d'un ensemble d'images de référence comme un modèle de mélange Gaussien sur la base de caractéristiques extraites de l'image de référence ;

de modéliser une image d'origine comme un mélange de modèles de mélange Gaussien d'image de référence en optimisant une fonction objective où chacun des modèles de mélange Gaussien est associé à un poids respectif; et

de délivrer en sortie les poids de la fonction objective optimisée comme la représentation d'image.

$$\sum_{k=l}^{K} \pi_k \int_{x \in \Omega} q_k(x) log\left(\sum_{i=l}^{N} \omega_i P_i(x)\right) dx$$

$$\Rightarrow \left\{\omega_1, \omega_2, \omega_3, \ldots \omega_N\right\}$$

MAIN MEMORY

IMAGE REPRESENTATION COMPONENT

PROCESSOR (CPU)

I/O

DATA MEMORY

R1 R2 R3 R4

GMM1
GMM2
GMM3
GMM4

COMPUTER

IMAGE SOURCE

KEYBOARD

DISPLAY

FIG. 1

EP 2 172 874 B1

S100 — ( START )

S102 — STORE REFERENCE IMAGES

S104 — FOR EACH REFERENCE IMAGE, EXTRACT FEATURES

S106 — FOR EACH REFERENCE IMAGE, TRAIN REFERENCE MODEL

S108 — RECEIVE ORIGINAL IMAGE TO BE CHARACTERIZED

S110 — EXTRACT FEATURES FROM ORIGINAL IMAGE

S112 — MODEL ORIGINAL IMAGE AS OPTIMIZED OBJECTIVE FUNCTION

S114 — STORE WEIGHTS FROM OBJECTIVE FUNCTION AS A REPRESENTATION OF THE ORIGINAL IMAGE

S116 — IMPLEMENT COMPUTER IMPLEMENTED PROCESS BASED ON REPRESENTATION

S118 — ( END )

FIG. 2

FIG. 3

EP 2 172 874 B1

FIG. 4

FIG. 5

## REFERENCES CITED IN THE DESCRIPTION

### Patent documents cited in the description

- EP 1343107 A2
- US 20070005356 A
- US 20070258648 A
- US 20080069456 A
- US 947859 A
- US 12245939 B
- US 11947859 B
- US 76773907 A
- US 033434 A

### Non-patent literature cited in the description

- **H. Greenspan et al.** Context-Dependent Segmentation and Matching in Image Databases. *Computer Vision and Imge Understanding,* January 2004, vol. 93 (1), 86-109
- **Dempster et al.** Maximum likelihood from incomplete data via the EM algorithm. *Journal of the Royal Statistical Society,* 1977
- **Goldberger et al.** An Efficient Image Similarity Measure based on Approximations of KL-Divergence Between Two Gaussian Mixtures. *ICCV,* 2003
- **G. Csurka ; C. Dance ; L. Fan ; J. Willamowski ; C. Bray.** Visual Categorization with Bags of Keypoints. *ECCV workshop on Statistical Learning in Computer Vision,* 2004
- **T. Hofmann.** Unsupervised learning by probabilistic latent semantic analysis. *Journal of Machine Learning,* 2001, vol. 42, 177-196
- **Pekalska ; P. Paclik ; R. Duin.** A Generalized Kernel Approach to Dissimilarity-based Classification. *Journal of Machine Learning Research, Special Issue on Kernel Methods,* 2002, vol. 2 (2), 175-211